# EUROPÄISCHE PATENTANMELDUNG

(11) **EP 0 585 214 A1**
(43) Veröffentlichungstag der Anmeldung: **02.03.1994**
(21) Anmeldenummer: 93890159.2
(22) Anmeldetag: 19.08.1993
(51) Int. Cl.: B62D 11/08, F16D 67/02

(54) **Kupplungs- und Bremseinrichtung**

(30) Priorität: 21.08.1992 AT 1692/92
(71) Anmelder: REFORM-WERKE BAUER & CO. GESELLSCHAFT M.B.H., A-4600 Wels (AT)
(72) Erfinder: Grosse-Brockhoff, Franz Josef, Dipl.-Ing., A-4600 Wels, Oberösterreich (AT)
(74) Vertreter: Itze, Peter, Dipl.-Ing.

(57) **Zusammenfassung**

Die Erfindung betrifft eine Kupplungs- und Bremseinrichtung für eine Antriebseinheit mit einer Antriebswelle und einer zu dieser konzentrisch gelagerten Abtriebswelle, wobei ein Kupplungsteil mit der einen der beiden Wellen fest verbunden ist und zumindest ein weiterer federbelasteter Kupplungsteil auf der anderen der beiden Wellen drehfest und axial verschiebbar angeordnet ist, wobei der auf der Abtriebswelle angeordnete Kupplungsteil durch eine Bremseinrichtung abtrennbar ist. Hiebei ist für den Angriff der Bremseinrichtung 8 ein konzentrisch zu den Wellen 5, 6 gelagerter und gegen axiales Verschieben gesicherter Ring 27 vorgesehen, der zumindest zwei am Umfang verteilte Kulissen 28 aufweist, in welche je ein an den Steuerflächen 29 der Kulissen 28 geführter Ausrücker 32 eingreift, der an dem federbelasteten Kupplungsteil 13 angebracht ist.

## Beschreibung

Die Erfindung betrifft eine Kupplungs- und Bremseinrichtung für eine Antriebseinheit mit einer Antriebswelle und einer zu dieser konzentrisch gelagerten Abtriebswelle, wobei ein Kupplungsteil mit der einen der beiden Wellen fest verbunden ist und zumindest ein weiterer federbelasteter Kupplungsteil auf der anderen der beiden Wellen drehfest und axial verschiebbar angeordnet ist, wobei der auf der Abtriebswelle angeordnete Kupplungsteil durch eine Bremseinrichtung abtrennbar ist.

Derartige Kupplungs- und Bremseinrichtungen sind als Lenkeinrichtungen an landwirtschaftlichen Einachsmotorfahrzeugen bekannt geworden. So zeigt und beschreibt das DT-Gebrauchsmuster G 90 05 564.0 ein Einachsmotorfahrzeug, dessen Achsantriebswelle beidseits über je eine Kupplungs- und Bremseinrichtung mit den konzentrisch gelagerten Abtriebswellen des linken und rechten Rades verbunden ist. Dazu ist in jeder Achshälfte eine auf der Achsantriebswelle fest befestigte Kupplungstrommel sowie ein auf der Abtriebswelle axial verschiebbarer und federbelasteter Kupplungsteil befestigt. Der Kupp-lungsteil weist Reibflächen zum Kuppeln bzw. Bremsen in der Weise auf, daß durch axiales Verschieben des Kupplungsteiles durch die Federkraft der Radantrieb gekuppelt ist. Zum Bremsen des Rades muß der Kupplungsteil entgegen der Federkraft axial verschoben werden, wobei zuerst der Antrieb entkuppelt wird und dann die Reibfläche der Bremse am Gehäuse zur Anlage kommt und dadurch das Rad abgebremst wird. Der Kupplungsteil ist über ein Wälzlager mit einer hydraulischen Einrichtung zum axialen Verschieben im Gehäuse gelagert. Diese hydraulische Einrichtung besteht aus zwei gegeneinander verschiebbaren Hohlzylindern, dessen Ölraum über eine Hydraulikleitung mit einem handbetätigten Stellzylinder verbunden ist. Durch Betätigen des linken oder rechten Radantriebes wird die Lenkung des Fahrzeuges erreicht.

Der Nachteil dieser bekannten Kupplungs- und Bremseinrichtung liegt einerseits darin, daß zur Überwindung der hohen für die Kupplung erforderlichen Federkraft eine große Betätigungskraft mit der Hand an der hydraulischen Betätigungseinrichtung aufzubringen ist, und andererseits in der ungenügenden Feinfühligkeit der Dosierung des Überganges von der Funktion Kuppeln in die Funktion Bremsen und umgekehrt.

Es ist daher Aufgabe der Erfindung, die Nachteile der bekannten Ausführung zu beseitigen und eine Kupplungs- und Bremseinrichtung zu schaffen, welche sich durch einfache Bedienung bei kleinen Betätigungskräften, hohe Drehmomentübertragung und Bremswirkung bei geringem Wartungsaufwand sowie sichere und exakte Funktion auszeichnet.

Die Aufgabe der Erfindung wird dadurch gelöst, daß für den Angriff der Bremseinrichtung ein konzentrisch zu den Wellen gelagerter und gegen axiales Verschieben gesicherter Ring vorgesehen ist, der zumindest zwei am Umfang verteilte Kulissen aufweist, in welche je ein an den Steuerflächen der Kulissen geführter Ausrücker eingreift, der an dem federbelasteten Kupplungsteil angebracht ist. Diese Anordnung ergibt den Vorteil, daß durch Betätigung der Bremse die Kupplung über die Kulissen und die darin geführten Ausrücker selbsttätig gelöst wird, wobei die Betätigungskraft zum Lösen der Kupplung aus der Umfangskraft durch in den Kulissen auftretende axial wirkende Kraftkomponenten erzeugt wird. Ein weiterer Vorteil liegt darin, daß die Abstimmung des Verhältnisses Bremskraft zu Ausrückkraft der Kupplung durch Gestaltung der Steuerflächen der Kulissen in einfacher Weise möglich ist. Dies ergibt eine genaue Dosierung des Überganges von der Funktion Kuppeln in die Funktion Bremsen und umgekehrt ohne zusätzlichen Wartungsaufwand.

Vorteilhafterweise können die Kulissen zur Begrenzung der Ausrückerbewegung und Übertragung der vollen Bremskraft zumindest einen in Umfangsrichtung wirkenden Anschlag aufweisen, wodurch dann nach Beendigung des Lösens der Kupplung eine dosierte Bremsung ermöglicht ist. Eine besonders vorteilhafte Ausführung einer Kupplungs- und Bremseinrichtung mit wechselnder Drehrichtung der Antriebswelle wird erreicht, wenn die Kulissen in bezug auf die Achse der Wellen eine symmetrische Anordnung aufweisen.Weiters können die Kulissen durch stirnseitig am Ring angebrachte ansteigende Flächen gebildet sein, wobei die Ausrücker durch radial am Kupplungsteil gelagerte Bolzen mit an den Kulissen anliegenden Zylinderflächen gebildet sind. Diese Anordnung der Kulissen und Ausrücker zeichnet sich durch Wartungsfreiheit, geringe Kosten und sichere Funktion aus. Für die Erzielung eines besonders kleinen Einbauraumes kann der Ring am Kupplungsteil drehbar gelagert und an der den Kulissen gegenüberliegenden Stirnseite in einem Gehäuse abgestützt sein. Um eine kostengünstige Lösung bei kleinem Einbauraum zu erreichen, kann der Ring eine zylindrische Außenfläche aufweisen, an welcher die Bremseinrichtung, vorzugsweise das Band einer Bandbremse, angreift. In weiterer Ausgestaltung der Erfindung kann der federbelastete Kupplungsteil als Kupplungstrommel zur Aufnahme einer Lamellenkupplung ausgestaltet sein. Dies ergibt die Möglichkeit, bei kleinen Abmessungen große Drehmomente zu übertragen. Schließlich kann die Lamellenkupplung aus einem auf der Abtriebswelle fest angebrachten Mitnehmer für die Innenlamellen sowie einem auf der Antriebswelle befestigten Kupplungsteil, welcher als Mitnehmer für die Außenlamellen ausgeführt ist, bestehen, wobei die Lamellen zwischen den durch die Stirnflächen des Kupplungsteiles und der Scheibe gebildeten Andrückflächen gehalten sind. Dadurch wird eine besonders kompakte und funktionssichere Lösung erzielt.

In den Zeichnungen ist ein Ausführungsbeispiel der Erfindung dargestellt.

Fig. 1 zeigt eine Antriebseinheit großteils im Längsschnitt.

Fig. 2 gibt einen Schnitt nach der Linie I-I in Fig. 1 wieder.

Fig. 3 ist eine Draufsicht auf den Ring mit den Kulissen in Einzeldarstellung.

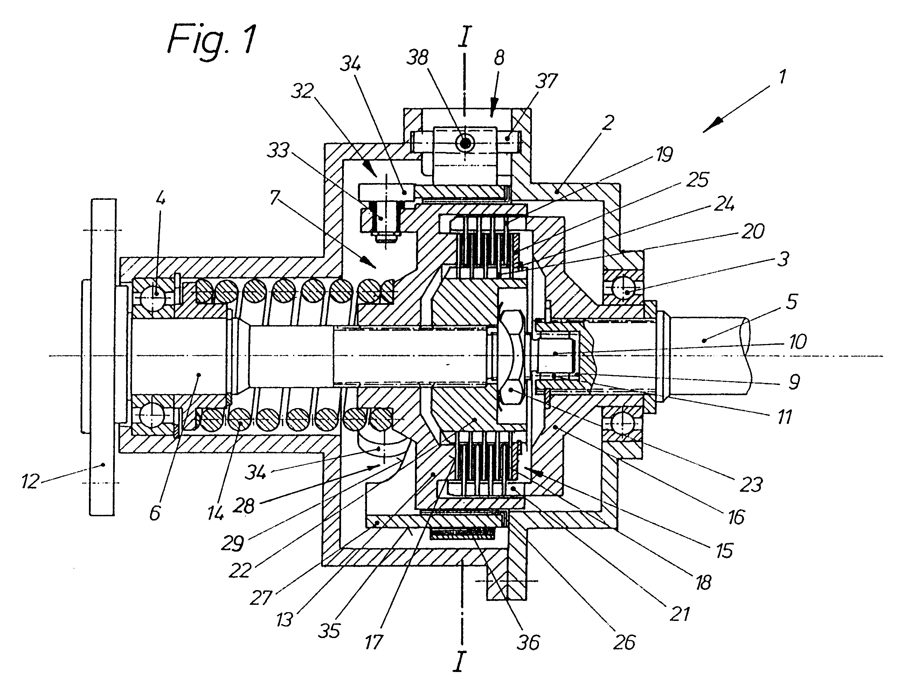

Die in Fig. 1 dargestellte Antriebseinheit 1 besteht aus einer Antriebswelle 5 und einer Abtriebswelle 6, welche in einem Gehäuse 2 mittels Lager 3, 4 zueinander konzentrisch gelagert sind, einer Kupplungseinrichtung 7 sowie einer Bremseinrichtung 8. Die Antriebswelle 5 wird einenends von einer nicht dargestellten Kraftquelle getrieben und weist andernends eine Bohrung 9 zur Aufnahme eines mittels eines Nadellagers 11 gelagerten Zapfens 10 der Abtriebswelle 6 auf.

Auf der Abtriebswelle 6 ist ein Flansch 12 zum Verbinden mit einer nicht dargestellten getriebenen Einheit befestigt. Die Kupplungseinrichtung 7 besteht in dem dargestellten Ausführungsbeispiel aus einem auf der Abtriebswelle 6 drehfest und axial verschiebbar gelagerten Kupplungsteil 13, einer axial darauf wirkenden Druckfeder 14, einer Lamellenkupplung 15 sowie einem mit der Antriebswelle 5 fest verbundenen Kupplungsteil 16. Die Lamellenkupplung 15 weist eine Anzahl zwischen den Andrückflächen 17, 18 angeordneter Lamellen 19, 20 auf, wobei die Außenlamellen 19 in die Mitnehmer 21 des Kupplungsteiles 16 und die Innenlamellen in den Mitnehmer 22 greifen.

Der Mitnehmer 22 ist drehfest mit der Abtriebswelle 6 verbunden und axial durch die Mutter 23 gehalten. Die Andrückflächen 17 bzw. 18 werden durch die Stirnflächen des Kupplungsteiles 13 bzw. der auf dem Mitnehmer 22 mittels eines Ringes 24 gehaltenen Scheibe 25 gebildet.

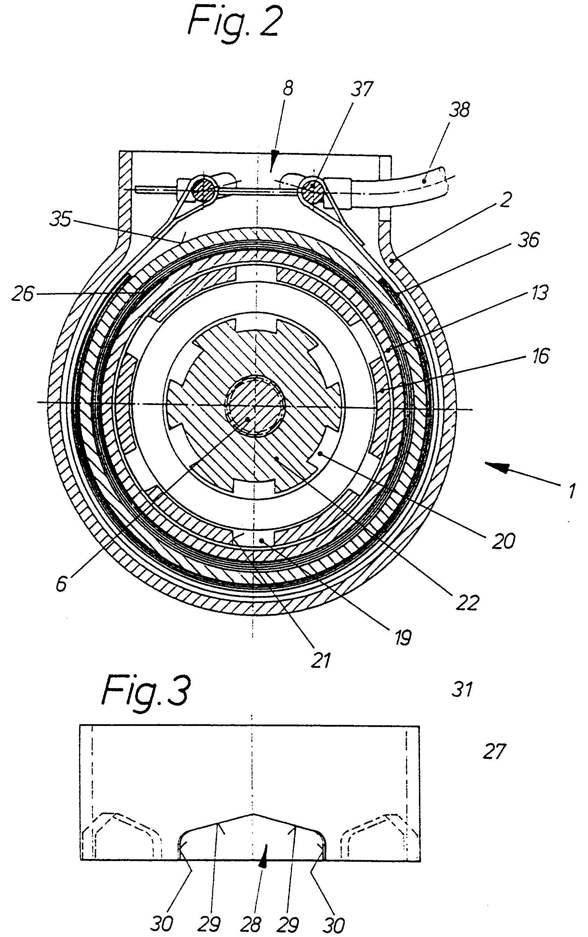

Der axial verschiebbare Kupplungsteil 13 trägt außen einen mittels einer Lagerbüchse 26 drehbar gelagerten Ring 27. Der in Fig. 3 näher dargestellte Ring 27 weist an einer Stirnfläche drei gleichmäßig am Umfang verteilte Kulissen 28 auf. Die Kulissen 28 werden in bezug auf die Achse des Ringes 27 symmetrisch durch ansteigende Steuerflächen 29 sowie Anschläge 30 gebildet. Wie aus Fig. 1 ersichtlich, ist die den Kulissen 28 gegenüberliegende Stirnseite (31) des Ringes (27) im Gehäuse (2) abgestützt, wobei in den Kulissen (28) je ein Ausrücker (32), im dargestellten Ausführungsbeispiel je ein radial im Kupplungsteil (13) gelagerter Bolzen (33) mit seiner Zylinderfläche (34) anliegt. An der zylindrischen Außenfläche (35) des Ringes (27) greift ein Bremsorgan, vorzugsweise das Band (36) einer Bandbremse, an. Die Bremseinrichtung (8) wird, wie aus Fig. 2 ersichtlich ist, durch Bolzen (37) im Gehäuse (2) gegen Verdrehen abgestützt und mittels eines Seilzuges (38) betätigt.

Die Funktion dieses vorbeschriebenen Ausführungsbeispieles einer Kupplungs- und Bremseinrichtung für eine Antriebseinheit ist folgendermaßen:

Bei gelöster Bremseinrichtung (8) treibt die Antriebswelle (5) über die durch die Kraft der Druckfeder (14) eingerückte Lamellenkupplung (15) die Abtriebswelle (6) an, wobei die Ausrücker (32) mit kleinem Spiel in den Kulissen (28) anliegen. Bei Betätigung der Bremseinrichtung (8) wird durch die Abbremsung des Ringes (27) dieser gegenüber dem Kupplungsteil (13) verschwenkt, wodurch die Ausrücker an den ansteigenden Flächen (29) der Kulissen (28) auflaufen und die Lamellenkupplung (15) durch axiales Verschieben des Kupplungsteiles (13) lüftet. Die Lamellenkupplung (15) ist völlig gelüftet, wenn die Ausrücker (32) an den Anschlägen (30) der Kulissen (28) anliegen. In diesem Fall ist die Abtriebswelle (6) voll abgebremst.

Der Einsatz dieser erfindungsgemäßen Einrichtung ist sowohl für Lenkeinrichtungen an Einachsfahrzeugen als auch für sonstige Antriebe im Fahrzeug- und Maschinenbau möglich.

## Patentansprüche

1. Kupplungs- und Bremseinrichtung für eine Antriebseinheit mit einer Antriebswelle und einer zu dieser konzentrisch gelagerten Abtriebswelle, wobei ein Kupplungsteil mit der einen der beiden Wellen fest verbunden ist und zumindest ein weiterer federbelasteter Kupplungsteil auf der anderen der beiden Wellen drehfest und axial verschiebbar angeordnet ist, wobei der auf der Abtriebswelle angeordnete Kupplungsteil durch eine Bremseinrichtung abtrennbar ist, dadurch gekennzeichnet, daß für den Angriff der Bremseinrichtung (8) ein konzentrisch zu den Wellen (5, 6) gelagerter und gegen axiales Verschieben gesicherter Ring (27) vorgesehen ist, der zumindest zwei am Umfang verteilte Kulissen (28) aufweist, in welche je ein an den Steuerflächen (29) der Kulissen (28) geführter Ausrücker (32) eingreift, der an dem federbelasteten Kupplungsteil (13) angebracht ist.

2. Kupplungs- und Bremseinrichtung nach Anspruch 1, dadurch gekennzeichnet, daß die Kulissen (28) zur Begrenzung der Ausrückerbewegung und Übertragung der vollen Bremskraft zumindest einen in Umfangsrichtung wirkenden Anschlag (30) aufweisen.

3. Kupplungs- und Bremseinrichtung nach Anspruch 1 oder 2, dadurch gekennzeichnet, daß die Kulissen (28) in bezug auf die Achse der Wellen (5, 6) eine symmetrische Anordnung aufweisen.

4. Kupplungs- und Bremseinrichtung nach einem der Ansprüche 1 bis 3, dadurch gekennzeichnet, daß die Kulissen (28) durch stirnseitig am Ring (27) angebrachte ansteigende Flächen (29) gebildet sind, wobei die Ausrücker (32) durch radial am Kupplungsteil (13) gelagerte Bolzen (33) mit an den Kulissen (28) anliegenden Zylinderflächen (34) gebildet sind.

5. Kupplungs- und Bremseinrichtung nach einem der Ansprüche 1 bis 4, dadurch gekennzeichnet, daß der Ring (27) am Kupplungsteil (13) drehbar gelagert und an der den Kulissen (28) gegenüberliegenden Stirnseite (31) in einem Gehäuse (2) abgestützt ist.

6. Kupplungs- und Bremseinrichtung nach einem der Ansprüche 1 bis 5, dadurch gekennzeichnet, daß der Ring (27) eine zylindrische Außenfläche (35) aufweist, an welcher die Bremseinrichtung (8), vorzugsweise das Band (36) einer Bandbremse, angreift.

7. Kupplungs- und Bremseinrichtung nach einem der Ansprüche 1 bis 6, dadurch gekennzeichnet, daß der federbelastete Kupplungsteil (13) als Kupplungstrommel zur Aufnahme einer Lamellenkupplung (15) ausgestaltet ist.

8. Kupplungs- und Bremseinrichtung nach Anspruch 7, dadurch gekennzeichnet, daß die Lamellenkupplung (15) aus einem auf der Abtriebswelle (6) fest angebrachten Mitnehmer (22) für die Innenlamellen (20) sowie einem auf der Antriebswelle (5) befestigten Kupplungsteil (16), welcher als Mitnehmer (21) für die Außenlamellen (19) ausgeführt ist, besteht und daß die Lamellen (19, 20) zwischen den durch die Stirnflächen des Kupplungsteiles (13) und der Scheibe (25) gebildeten Andrückflächen (17, 18) gehalten sind.
